# EUROPEAN PATENT APPLICATION

(11) **EP 3 239 213 A1**
(43) Date of publication of application: **01.11.2017**
(21) Application number: 16166847.0
(22) Date of filing: 25.04.2016
(51) Int. Cl.: C08J 3/05, C08G 18/75, C08K 3/00, C08K 3/16, C08K 3/32, C08G 18/08, C08G 18/12, C08G 18/32, C08G 18/42, C08G 18/44, C09J 175/04

(54) **AQUEOUS FLAME-RETARDANT POLYURETHANE POLYMERIC DISPERSIONS**

(71) Applicant: Henkel AG & Co. KGaA, 40589 Düsseldorf (DE)
(72) Inventor: ZHAO, Ligang, 40593 Düsseldorf (DE); SAUCA, Sorin N., Timisoara, 300152 (RO)

(57) **Abstract**

The present invention relates to methods for the preparation of aqueous polyurethane dispersions comprising hydrophobic flame retardants that can be used as adhesives or coatings, are surfactant free and have low VOC emissions and are environmentally friendly. The aqueous polyurethane dispersions are manufactured by a process comprising forming an NCO-terminated polyurethane prepolymer from a reaction mixture comprising at least one polyol, at least one anionic stabilizer and at least one polyisocyanate; adding at least one hydrophobic flame retardant to the prepolymer to obtain a prepolymer/hydrophobic flame retardant mixture; dispersing the prepolymer/hydrophobic flame retardant mixture into a continuous aqueous phase under application of shear forces to obtain an emulsion; and reacting the prepolymer with at least one chain extension agent. Also encompassed are the thus obtained aqueous dispersions, compositions containing them and their use as coatings and adhesives.

## Description

The present invention relates to methods for the preparation of aqueous polyurethane dispersions comprising hydrophobic flame retardants that can be used as adhesives or coatings, are surfactant free and have low VOC emissions and are environmentally friendly. Also encompassed are the thus obtained aqueous dispersions, compositions containing them and their use as coatings and adhesives.

Polyurethane waterborne dispersions are innovative materials that provide chemical resistance, good film formation properties, toughness, flexibility and superior low-temperature impact resistance. Hence, these latexes are suitable candidates to be used as adhesives or coatings for various substrates. In order to provide flame retardant properties to said adhesives and coatings, flame retardants are used. Water miscible flame retardants are commonly based on toxic heavy metals and therefore disadvantageous. While the majority of flame retardants are hydrophobic, they typically suffer from the drawback that their hydrophobicity causes problems during the production of aqueous adhesives and coating compositions. Specifically, to provide a flame retardant aqueous adhesive or coating composition free of heavy metals, said adhesives and coatings are commonly formulated in a first step and the flame retardant is blended in a second step. However, this established approach often causes stability problems, as the obtained product is not storage stable and undergoes phase separation. In addition, the production method includes an additional blending step.

Commonly used halogenated organic flame retardants are usually used in combination with antimony trioxide, which acts as a synergist and boosts their flame retardant properties. However, the use of antimony trioxide (as well as halogenated materials) is undesirable for environmental and health reasons and requires complex suspension protocols.

US 2010/0152374 describes a process for incorporating reactive phosphate based flame retardant diols into polyurethane chains via covalent bonding. However, applicable flame retardants are limited to reactive flame retardants with low viscosity.

Thus, there is still need in the art for water-based flame retardant adhesives and coating compositions that are sustainable, non-toxic, storage stable, and easily producible.

The present invention meets this need and provides a stable water-based polyurethane dispersion comprising hydrophobic flame retardants for use in adhesive and coating compositions. The invention is based on the inventors' surprising finding that the afore-mentioned technical problems can be overcome by producing a water-based polyurethane polymer dispersion comprising a hydrophobic flame retardant in an environmentally friendly process without the need for toxic flame retardants. Using such a process, the flame retardant is incorporated into the polyurethane matrix and additional steps of blending the flame retardant into the latex are no longer necessary. In addition, said process provides for an optimal distribution of the flame retardant in the latex particles, so that the amount of flame retardant needed for the same flame retardant effect can be significantly reduced. Surprisingly, it has been found that by careful selection of the flame retardant, the tackiness of the resulting adhesive as well as its adhesion properties for various substrates can be positively influenced. The invented process thus provides for significant cost reduction due to less amounts of flame retardant, lower safety and environmental measures in processing and manufacture of the dispersions and reduction of the number of process steps necessary, while being more versatile, simpler, and easier to upscale. The thus produced dispersions are advantageous with respect to adhesive properties and stability and show good mechanical properties even after extended periods of storage. Further, the obtained dispersions show good film formation and are storage-stable.

In a first aspect, the present invention is thus directed to a process for manufacturing an aqueous polyurethane dispersion comprising at least one hydrophobic flame retardant, the process comprising the steps of:
(1) forming an NCO-terminated polyurethane prepolymer with a number average molecular weight Mₙ in the range of 2000 g/mol to 10000 g/mol, preferably of 3000 g/mol to 8000 g/mol, more preferably of 3500 g/mol to 5500 g/mol from a reaction mixture comprising or consisting of:
   (a) at least one polyol, preferably comprising at least one polyether polyol, at least one polyester polyol, at least one polycarbonate polyol or a mixture thereof, with a number average molecular weight Mₙ in the range of 400 to 4000 g/mol, preferably of 500 g/mol to 3000 g/mol;
   (b) at least one anionic stabilizer, wherein the at least one anionic stabilizer comprises at least two hydroxyl groups and at least one negatively charged functional group, preferably a carboxyl or sulfonic acid group; and
   (c) at least one polyisocyanate, preferably at least one aliphatic di- and/or triisocyanate, wherein the at least one polyisocyanate is used in excess with respect to the molar ratio of the isocyanate groups to the hydroxy groups of the other components of the reaction mixture to obtain an NCO-terminated polyurethane prepolymer;
(2) adding at least one hydrophobic flame retardant to the prepolymer to obtain a prepolymer/hydrophobic flame retardant mixture;
(3) dispersing the prepolymer/hydrophobic flame retardant mixture into a continuous aqueous phase, preferably under application of shear forces, more preferably by mechanical stirring, to obtain an emulsion; and
(4) reacting the prepolymer with at least one chain extension agent to obtain an aqueous polyurethane dispersion.

In another aspect, the invention relates to the aqueous polyurethane dispersion obtainable according to the process described herein.

Further aspects of the invention relate to adhesive or coating compositions that contain the aqueous polyurethane dispersion disclosed herein and the use of the aqueous polyurethane dispersion in adhesives and coatings.

"One or more", as used herein, relates to at least one and comprises 1, 2, 3, 4, 5, 6, 7, 8, 9 or more of the referenced species. Similarly, "at least one" means one or more, i.e. 1, 2, 3, 4, 5, 6, 7, 8, 9 or more. "At least one", as used herein in relation to any component, refers to the number of chemically different molecules, i.e. to the number of different types of the referenced species, but not to the total number of molecules. For example, "at least one polyol" means that at least one type of molecule falling within the definition for a polyol is used but that also two or more different molecule types falling within this definition can be present, but does not mean that only one molecule of said polyol is present.

If reference is made herein to a molecular weight, this reference refers to the number average molecular weight Mₙ, if not explicitly stated otherwise. The number average molecular weight Mₙ can be calculated based on end group analysis (OH numbers according to DIN 53240) or can be determined by gel permeation chromatography according to DIN 55672-1:2007-08 with THF as the eluent. If not stated otherwise, all given molecular weights are those determined by end group analysis. The weight average molecular weight M_{w} can be determined by GPC, as described for Mₙ.

All percentages given herein in relation to the compositions or formulations relate to weight % based on the total weight of the respective composition or formula, if not explicitly stated otherwise.

The at least one polyol (a) is a non-functionalized polyol, i.e. contains no functional groups besides the hydroxyl groups. The polyol (a) has a number average molecular weight Mₙ in the range of 400 to 4000 g/mol, preferably of 500 to 3000 g/mol, more preferably 1000 to 3000 g/mol. In preferred embodiments, the polyol (a) comprises at least one polyether polyol, at least one polyester polyol, at least one polycarbonate polyol or a mixture thereof.

The polyether polyol may be a polyalkylene glycol homo- or copolymer, preferably a polypropylene glycol homo- or copolymer, a polyethylene glycol homo- or copolymer, a polytetramethylene ether glycol (poly(THF) or PTMEG) homo- or copolymer, or a polypropylenglycol/polyethyleneglycol block copolymer. In various embodiments, the polyether polyol has a number average molecular weight Mₙ of 400 to 4000, preferably 500 to 3000 g/mol, more preferably 1000 to 3000 g/mol.

Polyester polyols that are useful in the processes described herein include those that are obtainable by reacting, in a polycondensation reaction, dicarboxylic acids with polyols. The dicarboxylic acids may be aliphatic, cycloaliphatic or aromatic and/or their derivatives such as anhydrides, esters or acid chlorides. Specific examples of these are succinic acid, glutaric acid, adipic acid, pimelic acid, suberic acid, azelaic acid or sebacic acid, phthalic acid, isophthalic acid, trimellitic acid, phthalic acid anhydride, tetrahydrophthalic acid anhydride, glutaric acid anhydride, maleic acid, maleic acid anhydride, fumaric acid, dimeric fatty acid and dimethyl terephthalate. Examples of suitable polyols are monoethylene glycol, 1,2-propanediol, 1,3-propanediol, 1,4-butanediol, 3-methylpentane-1,5-diol, neopentyl glycol (2,2-dimethyl-1,3-propanediol), 1,6-hexanediol, 1,8-otaneglycol cyclohexanedimethanol, 2-methylpropane-1,3-diol, dithyleneglycol, triethyleneglycol, tetraethyleneglycol, polyethyleneglycol, dipropyleneglycol, polypropyleneglycol, polypropyleneglycol, dibutyleneglycol and polybutyleneglycol. Alternatively, they may be obtained by ring-opening polymerization of cyclic esters, preferably ε-caprolactone.

In various embodiments, the polyester polyol has a melting temperature Tₘ > 0°C, preferably > 40 °C and/or has a number average molecular weight Mₙ in the range of 400 to 4000, preferably 500 to 3000 g/mol, more preferably 1000 to 3000 g/mol, most preferably about 2000 g/mol.

Suitable polycarbonates can be obtained by reaction of carbon acid derivatives, e.g. diphenyl carbonate, dimethyl carbonate or phosgene with diols. Suitable examples of such diols include ethylene glycol, 1,2-and 1,3-propanediol, 1,3-and 1,4-butanediol, 1,6-hexanediol, 1,8-octanediol, neopentyl glycol, 1,4-bishydroxymethyl cyclohexane, 2-methyl-1,3-propanediol, 2,2,4-trimethyl pentanediol-1,3, dipropylene glycol, polypropylene glycols, dibutylene glycol, polybutylene glycols, bisphenol A, tetrabromobisphenol A as well as lactone-modified diols. The diol component preferably contains 40 to 100 wt. % hexanediol, preferably 1,6-hexanediol and/or hexanediol derivatives. More preferably the diol component includes examples that in addition to terminal OH groups display ether or ester groups.

The hydroxyl polycarbonates should be substantially linear. However, they can optionally be slightly branched by the incorporation of polyfunctional components, in particular low-molecular polyols. Suitable examples include glycerol, trimethylol propane, hexanetriol-1,2,6, butanetriol-1,2,4, trimethylol propane, pentaerythritol, quinitol, mannitol, and sorbitol, methyl glycoside, 1,3,4,6-dianhydrohexites.

In various embodiments, the polycarbonate polyol has a melting temperature Tₘ > 0°C, preferably > 40 °C. In various preferred embodiments, the polycarbonate polyol has a number average molecular weight Mₙ in the range of 400 to 4000, preferably of 500 to 3000 g/mol, more preferably of 1000 to 3000 g/mol, most preferably of about 2000 g/mol.

Suitable polycarbonate polyols are, without limitation, those obtainable under the trademark names Desmophen® C3200 (Bayer) and Kuraray® C2050 (Poly-(3-methyl-1,5-pentanediol, 1,6-hexanediol)carbonate; Kuraray).

The reaction mixture may further comprise monomeric diols, such as 1,4-butanediol.

The reaction mixture further comprises at least one anionic stabilizer, wherein the at least one anionic stabilizer comprises at least two hydroxyl groups and at least one negatively charged functional group, preferably a carboxyl or sulfonic acid group.

The term "stabilizer", as used herein in the context of anionic and nonionic stabilizers, relates to a class of molecules that can stabilize the droplets in a dispersion or emulsion, i.e. prevent coagulation or coalescence. In various embodiments the stabilizer molecules comprise a hydrophilic and a hydrophobic part, with the hydrophobic part interacting with the droplet and the hydrophilic part be exposed to the solvent. While commonly used stabilizers are surfactants and may bear an electric charge, for example may be anionic surfactants or cationic surfactants, or may, alternatively, be non-ionic, the present invention avoids the use of surfactants, but uses stabilizer compounds that are built into the polyurethane polymer during (pre)polymer formation that provide for self-emulsifiable polyurethanes which spontaneously form stable dispersions in water without the assistance of external emulsifiers and exhibit increased stability.

The stabilizers used herein comprise anionic groups. The presence of such charged groups increases the stability of the dispersed polymer droplets or particles. Suitable anionic groups include, but are not limited to acidic groups, such as carboxylic acid or sulfonic acid groups and their respective salts. Concrete compounds suitable as anionic stabilizers in the sense of the present invention are 2,2-bis(hydroxyalkyl)alkane monocarboxylic acids, in particular 2,2-bis(hydroxymethyl)alkane monocarboxylic acids with a total carbon atom number of 5-8, such as 2,2-bis(hydroxymethyl)propionic acid (dimethylol propionic acid; DMPA). Also suitable are sulfonated polydiols with a molecular weight M_{w} in the range of up to 1000 g/mol, preferably up to 500 g/mol. Such sulfonated polydiols, for example propoxylated 1-methyl-2-methylol-3-hydroxy-1-propanesulfonate with a molecular weight M_{w} of about 430 g/mol, are commercially available under the name GS-7Q (Yedang G & Co. Ltd).

The above-described anionic stabilizers may, in various embodiments, be combined with other compounds that can act as stabilizers, namely nonionic stabilizers.

Such nonionic stabilizers comprise polyols, preferably diols, or a mixture of different polyols and/or diols, including the monomeric diols and certain polyether polyols that have been described above in connection with the polyol (a). Such nonionic stabilizers have HLB (hydrophile lipophile balance) values between 6 and 19, preferably between 8 and 18. The HLB values are calculated by calculating the molecular weight of the hydrophilic portion of the molecule and dividing said molecular weight of the hydrophilic part of the molecule by the total molecular weight of the molecule and then dividing the obtained percentage by 5. Typical nonionic stabilizers for oil-in-water emulsions have HLB values between 8 and 18. Preferred monomeric diols are glycols, such as ethylene glycol, propylene glycol, butylene glycol, neopentyl glycol and the like and (as polyether polyols) polymers thereof, such as polyethylene glycol, polypropylene glycol, and polybutylene glycol and copolymers of ethylene glycol, propylene glycol, and butylene glycol, preferably of ethylene glycol and propylene glycol. The weight average molecular weight M_{w} of such polymeric stabilizers is preferably in the range of up to about 4000 g/mol, preferably up to about 3000 g/mol, more preferably up to about 2000 g/mol, typically calculated based on the OH number. Suitable non-ionic ethylene glycol/propylene glycol stabilizers are for example those commercially available under the trademark name Pluronic® from BASF, for example Pluronic PE3500 (molar mass of PP glycol block: 850 g/mol, 10 % PE glycol in molecule; molecular weight ca. 1000 g/mol) or Pluronic PE4300 (molar mass of PP glycol block: 1100 g/mol, 30 % PE glycol in molecule; molecular weight ca. 1750 g/mol).

In various embodiments of the invention, the at least one anionic stabilizer, such as DMPA and/or a sulfonated polydiol, may be combined with a nonionic polyol stabilizer, preferably diol stabilizer, as defined above. In one specific embodiment, the mixture comprises at least one ethyleneglycol/propyleneglycol copolymer with a molecular weight M_{w} of up to 3000 g/mol and at least one anionic diol stabilizer, preferably DMPA or a sulfonated polydiol or both. In such mixtures the weight ratio of nonionic to anionic stabilizer usually ranges from about 1:1 to about 20:1, preferably about 9:1 to 1:1. The polyol mixture, in various embodiments, comprises 0.1 to 20 wt.-%, preferably 1 to 5 wt.-%, more preferably 1 to 3 wt.-%, of the anionic stabilizer and/or 1 to 20 wt.-%, preferably 3 to 9 wt.-%, more preferably 5 to 9 wt.-%, of the nonionic stabilizer.

The term "reaction mixture", as used herein, relates to the mixture of the polyols including the stabilizer(s) and the polyisocyanate(s). Preferably, the reaction mixture is free of surfactants and/or aromatic organic compounds besides those mentioned herein.

"Polyol mixture", as used herein in relation to the mixture comprising the polyols, relates to a mixture comprising the at least one polyol (a), the at least one anionic stabilizer (b), and, optionally, any additional polyols that may be present, such as, for example, nonionic stabilizers.

The polyol mixture preferably does not contain organic solvents, and preferably also no surfactants and no further additives, i.e. consists of polyols, preferably those defined above, and the stabilizers.

In various embodiments, the polyol mixture comprises about 20 to about 99 wt.-%, preferably 30 to 85 wt.-%, of the at least one polyol (a), preferably a mixture of different polyols, for example of polycarbonate polyols, polyester polyols and/or polyether polyols, based on the weight of the polyol mixture. In some embodiments, the at least one polyol (a) may comprise a nonionic stabilizer polyol as defined above.

The at least one anionic stabilizer is usually contained in amounts of about 0.1 to 20 wt.-%, preferably 1 to 5 wt.-%, more preferably 2 to 4 wt.-%, most preferably 2 to 3 wt.-% based on the weight of the polyol mixture. If present, nonionic stabilizers are used in amounts of 1 to 20 wt.-%, preferably 3 to 9 wt.-%, more preferably 5 to 9 wt.-%, based on the total weight of the polyol mixture. In various embodiments, the anionic stabilizers as defined above, may be used in amounts of 1 to 5 wt.-%, preferably 2 to 4 wt.-%, and nonionic stabilizers in amounts of 3 to 9 wt.-%, preferably 5 to 9 wt.-%, based on the total weight of the polyol mixture.

The final reactant employed in the formation of the polyurethane prepolymer is a polyisocyanate. Any compound which includes at least two isocyanate groups is within the contemplation of the present invention. It is preferable, however, that the polyisocyanate be a diisocyanate. The incorporation of small amounts of isocyanate with a functionality higher than two, in particular a triisocyanate, is also contemplated and may under certain circumstances even be advantageous. Such polyisocyanates can act as cross-linkers. In this case where the polyisocyanate acts as a cross-linker, polyisocyanates based on hexamethylene diisocyanate are preferred. Suitable diisocyanates include, without limitation, methylenediphenyl diisocyanate (MDI), toluene-2,4-diisocyanate (TDI), hexamethylene diisocyanate (HDI), polymeric diphenylmethane diisocyanate (PMDI), isophorone diisocyanate (IPDI), methylene-4,4-bis(cyclohexyl)diisocyanate (H12MDI) and mixtures thereof. Although both aliphatic and aromatic polyisocyanates are within the contemplation of the present invention, it is preferred that the polyisocyanate be an aliphatic polyisocyanate. Thus, in a particularly preferred embodiment, the polyisocyanate is an aliphatic diisocyanate. Among particularly preferred aliphatic diisocyanates are isophorone diisocyanate, hexamethylene diisocyanate, and mixtures thereof. Suitable polyisocyanates are, for example, commercially available under the trademark name Desmodur® from Bayer AG (DE).

The polyisocyanate is used in molar excess with respect to the molar ratio of the isocyanate groups to the OH groups of all polyols present in the reaction mixture, i.e. in a concentration in excess of the stoichiometric concentration required to completely react with the hydroxyl groups, the OH/NCO equivalent ratio preferably being 1:1.1 to 1:4, more preferably 1:1.2 to 1:1.3. Preferably, the amount of the polyisocyanate is 20 % to 150 % in excess of the stoichiometric concentration required to completely react with the hydroxyl groups. The amount of the at least one polyisocyanate in the reaction mixture is typically in the range of 10 to 30 wt.-% based on the reaction mixture. The remainder of the reaction mixture may be made up by the polyol mixture, as defined above.

Providing the polyol mixture may include the step of mixing the polyols (a) and, optionally, (b) and the stabilizers and heating the mixture. The heating may be required in case the polyols employed are solid at room temperature and need to be melted to form the polyol mixture. In preferred embodiments, the polyols and the stabilizers are combined and heated to about 55 to 100°C, for example about 85°C, while stirring the mixture under vacuum to dry. After the mixing, the mixture may be cooled to about 60°C for the addition of the isocyanates.

"About", as used herein, relates to ± 10 %, preferably ± 5 % of the numerical value to which it refers. "About 60°C" thus relates to 60 ± 6, preferably 60 ± 3 °C.

The polyol mixture is subsequently combined with at least one polyisocyanate in the reaction mixture to form the prepolymer. The prepolymer reaction usually occurs at elevated temperature, preferably in the range of between about 55°C and 105°C, more preferably between about 60°C and about 100°C, more preferably between about 65 and 85°C, over a period of between about 1 and about 24 hours, preferably about 3 hours. The reaction may be carried out in the presence of a catalyst that is added, such as a metal-based catalyst, for example a tin-based catalyst, or an organic catalyst. In preferred embodiments of the invention, the reaction mixture does not comprises a catalyst as defined above or only contains minor amounts of a tin catalyst. The tin catalyst may be used dissolved in an organic solvent, preferably acetone.

The reaction continues until the free isocyanate content reaches or comes very close to the calculated value, as determined by standard titration with dibutylamine. Preferred values for the free isocyanate content in the prepolymer are in the range between 0.2 and 3 wt.-%, preferably 1 to 2 wt.-% based on the total amount of polyols, including the stabilizer(s), and polyisocyanate in the mixture.

Once the free isocyanate content reaches the predetermined value, as defined above, the temperature may be reduced, for example to about 60°C.

In the prepolymer preparation preferably no chain terminating agents or endcapping agents are used to control/limit the molecular weight of the prepolymer formed.

The prepolymer has a number average molecular weight Mₙ of 2000 to 10000 g/mol, preferably 3000 to 8000 g/mol, and more preferably 3500 to 5500 g/mol.

In step (2), at least one hydrophobic flame retardant is added to the prepolymer obtained in step (1) to obtain a prepolymer/hydrophobic flame retardant mixture.

In general, the at least one hydrophobic flame retardant may be any hydrophobic flame retardant known in the art, which is suitable for the purpose of the present invention. In a preferred embodiment, the at least one hydrophobic flame retardant is selected from the group consisting of organohalogen flame retardants, organophosphorous flame retardants, and mixtures thereof. More preferably, the flame retardant is selected from the group consisting of 1,2-di-[2-ethylhexylcarboxylate]-3,4,5,6-tetrabromobenzene, which is commercially available under the trademark DP-45® from Great Lakes, diphenyl tolyl phosphate, which is commercially available under the trademark Disflamoll DPK® from Lanxess, organobromines such as decabromodiphenyl ether (decaBDE), decabromodiphenyl ethane, which is a replacement for decaBDE, polymeric brominated compounds such as brominated polystyrenes, brominated carbonate oligomers (BCOs), brominated epoxy oligomers (BEOs), tetrabromophthalic anyhydride, tetrabromobisphenol A (TBBPA) and hexabromocyclododecane (HBCD), triphenyl phosphate (TPP), resorcinol bis(diphenylphosphate) (RDP), bisphenol A diphenyl phosphate (BADP), and tricresyl phosphate (TCP) and polyphosphates such as those available from Daihatsu Chemical under the tradenames CR733S, CR741 and PX-200; aliphatic phosphonates such as dimethyl methylphosphonate (DMMP) and such as those available from Daihatsu Chemical under the tradenames DAIGUARD-580, -610 and -880; and phosphinates such as aluminum diethyl phosphinate, tris(2,3-dibromopropyl) phosphate (brominated tris) and chlorinated organophosphates such as tris(1,3-dichloro-2-propyl)phosphate (chlorinated tris or TDCPP) and tetrekis(2-chlorethyl)dichloroisopentyldiphosphate, and mixtures thereof. Alternatively, the phosphorous-containing flame retardant commercially available under the trademark Emerald Innovation NH-1® from Great Lakes may be used. In various embodiments, the flame retardants do not include heavy metals, in particular antimony. In various other embodiments, the flame retardants used are preferably halogen-free.

The at least one hydrophobic flame retardant is contained in the aqueous dispersion in an amount of 2 to 25 wt.-%, preferably 5 wt.-% to 20 wt.-%, and more preferably 10 wt.-% and 15 wt.-% based on the total weight of the aqueous dispersion with a solid content of 55%.

In a preferred embodiment, the at least one hydrophobic flame retardant is dissolved in an organic solvent before it is added to the NCO-terminated polyurethane prepolymer. In general, said organic solvent may be any organic solvent known in the art and suitable for the purpose of the present invention. In a preferred embodiment, the organic solvent is acetone.

If the flame retardant is dissolved in an organic solvent, the weight ratio of the organic solvent and the continuous aqueous phase, preferably water, in step (3) is between 1:3 to 3:1, preferably 1:2 to 2:1, and more preferably 1:1.5 to 1.5:1.

If suitable, the thus obtained post reaction mixture is stirred in order to provide a homogeneous mixture, optionally, at elevated temperature before it is further processed.

In preferred embodiments, the prepolymer may be neutralized prior to step (3), preferably between step (2) and (3), by using a suitable neutralization agent. In case an anionic acidic stabilizer is used, an amine base, such as triethylamine may be used.

The thus formed prepolymer/hydrophobic flame retardant mixture is then dispersed as such into a continuous aqueous phase, preferably water. The dispersing step may be carried out at elevated temperature, for example in the range of about 30 to 60 °C, for example at about 40 °C. The dispersing step may include emulsifying the polyurethane prepolymer into a continuous aqueous phase, preferably water, to form an emulsion, preferably under the action of a shear force. In various embodiments, the shear force is brought about by means of mechanical stirring only, for example using a mechanical stirrer at up to 1000 rpm, for example 200 to 1000 rpm, preferably 300 to 700 rpm, more preferably 400 to 600 rpm.

The term "emulsion", as used herein, relates to oil-in-water (O/W) emulsions, i.e. emulsions in which water is used in excess and is the continuous medium. In the described processes, stable droplets are obtained, which have typically a size between 50 and 500 nm, preferably between 100 and 400 nm, more preferably between 100 and 300 nm, most preferably between 100 and 200 nm as determined by dynamic light scattering (DLS) according to ISO 22412.

During chain extension in step (4), the isocyanate end-groups of the prepolymer are reacted with an appropriate chain extension agent containing at least two terminal NCO-reactive groups, for example a diamine, such as hydrazine, an alkylene diamine or cycloalkylene diamine or silane-containing diamine, preferably ethylene diamine, isophorone diamine, piperazine, or polyetheramine. Diols, such as an alkyldiol, including but not limited to 1,4-butanediol and 2-butyl-2-ethyl-1,3-propanediol, or water can also be used. The afore-mentioned chain extension reagents may also be combined with an endcapping reagent, such as a silane-containing amine, including, without limitation (3-aminopropyl)triethoxysilane (APTES). Silane-containing amines can further promote substrate adhesion. The chain extension reaction may be performed until essentially total conversion of the isocyanate groups, i.e. the chain extension agent is continuously added until free isocyanate groups are no longer detectable. It is generally preferred that the chain extension reaction is carried out until total conversion of the isocyanate groups. The conversion can be monitored by techniques well-established in the art, for example IR spectroscopy.

The presence of a catalyst and/or higher temperature may also be required. Preferred chain extension agents useful according to the present invention include ethylene diamine, water, isophorone diamine, and/or a polyetherdiamine.

In a preferred embodiment, the organic solvent, which has been used to dissolve the at least one hydrophobic flame retardant, is removed after step (4), preferably by vacuum distillation.

In various preferred embodiments, the method is a one-pot synthesis.

The aqueous polyurethane dispersion formed preferably has a solid content of 20 to 70 wt.-%, preferably 30 to 55 wt.-%, more preferably 38 to 48 wt.-% (determined using automatic moisture balance). The viscosity is preferably in the range of 50 to 10000 mPas, preferably 100 to 1000 mPas as determined by a Brookfield viscosimeter, spindle 4, 20 rpm. The viscosity may be adjusted to suit the desired application form by adding a thickener. Suitable viscosity adjusting and thickening agents are well-known in the art. The particle size as determined by dynamic light scattering (DLS) is preferably in the range of 50 to 500 nm, more preferably 100 to 400 nm, even more preferably between 100 and 300 nm, most preferably between 100 and 200 nm. The application drying temperature can range from 20 to 100°C, but preferably is about 20 to 85°C, more preferably 50 to 80°C.

The present invention also relates to adhesive and coating compositions that comprise the aqueous polyurethane dispersions described herein.

The dispersion may also directly be used as an adhesive or coating or a component of such an adhesive or coating. The use of the polymers and compositions disclosed herein for such applications thus also forms parts of the present invention.

Such adhesive or coating compositions can contain further ingredients all of which are well-known in the field. However, the adhesive composition is preferably free of inorganic fillers, and/or organic solvents, and/or volatile organic compounds (VOC), and/or metal-containing compounds, and/or aromatic compounds.

The term "free of", as used in this context, means that the mixture, dispersion and/or composition contains less than 1 wt.-% of the given component, preferably less than 0.5 wt.-%, more preferably less than 0.1 wt.-%.

"Organic solvents", as used herein, relate to all commonly used organic solvents, in particular volatile organic compounds (VOC), and include the widely used solvents acetone and NMP as well as various alcohols, ethers, esters, hydrocarbons, and the like that are used for their solvent properties only.

The adhesives containing the dispersions described herein show good adhesive strength, while being solvent free and thus environmentally friendly. Further, the adhesives provide flame retardant properties.

The adhesives can be applied to the substrate by all known techniques, including without limitation, spraying, painting, dip-coating, spin-coating, printing and the like.

It is understood that all embodiments disclosed herein in relation to the methods are similarly applicable to the disclosed dispersions, compositions, and uses and vice versa.

The following examples are given to illustrate the present invention. Because these examples are given for illustrative purposes only, the invention should not be deemed limited thereto.

### Examples

### Example 1:

Desmophen 3200 polycarbonate polyol (Mₙ = 2000g/mol; 104.5 g) and anionic stabilizer DMPA (9.67 g) were placed in a 1L three-necked round bottom flask equipped with a condenser and a mechanical stirrer. The mixture was heated to 85°C. At this temperature, the solid components melted and a homogeneous mixture was obtained. At this temperature, high vacuum was applied (< 0.1 mbar) while the temperature was set to 80°C in order to remove water. The mixture was left stirring under vacuum at 80°C for 2 hours.

After that, vacuum was stopped and flask was flushed with Argon. The temperature was decreased to 60°C and then IPDI (isophorone diisocyanate, 46.16 g) was also added (3 to 6 °C temperature increase was observed).

Then, a freshly prepared tin catalyst (75 mg) in acetone (75 mg) was added. Upon addition of the catalyst, the temperature raised rapidly by some degrees. When the temperature increase stopped (at around 70°C), the heating was set to 80°C and once at this temperature, it was stirred for 3 hours. Then, the NCO content was measured: 3.33 % NCO. Then a mixture of acetone (175 g) and diphenyl tolyl phosphate (80 g, commercially available under the trademark Disflamoll DPK ® from Lanxess) were added to dissolve the prepolymer, and 10 minutes later, triethylamine (6.5 g) was added for neutralization. 10 minutes later, emulsification was carried out: the warm prepolymer mixture was mixed with warm water (415 g) to obtain a mixture 50/50 of organic solution/water, which was stirred for 20 minutes at 500 rpm.

Then, the chain extension was performed; the resulting emulsion was placed in a round bottom flask with mechanical stirrer and isophorone diamine (IPDA) was added until no NCO was detected in IR spectrum.

Then, the acetone was removed by a rotavapor evaporator and the resulted dispersion was filtered and the particle size was measured by dynamic light scattering MALVERN equipment. No coagulum was observed on the filter. A particle size of 170 nm and a PDI of 0.111 were recorded in DLS (dynamic light scattering) Malvern Mastersizer.

### Example 2:

Desmophen 3200 Polycarbonate polyol (104.5 g) and anionic stabilizer DMPA (9.67 g) were placed in a 1L three-necked round bottom flask equipped with a condenser and a mechanical stirrer. The mixture was heated to 85°C. At this temperature, the solid components melted and a homogeneous mixture was obtained. At this temperature, high vacuum was applied (< 0.1 mbar) while the temperature was set to 80°C in order to remove water. The mixture was left stirring under vacuum at 80°C for 2 hours.

After that, vacuum was stopped and flask was flushed with Argon. The temperature was decreased to 60°C and then IPDI (isophorone diisocyanate, 46.16 g) was also added (3 to 6 °C temperature increase was observed).

Then, a freshly prepared tin catalyst (75 mg) in acetone (75 mg) was added. Upon addition of the catalyst, the temperature raised rapidly to some degrees. When the temperature increase stopped (at around 70°C), the heating was set to 80°C and once at this temperature, it was stirred for 3 hours. Then, the NCO content was measured: 3.33 % NCO. Then a mixture of acetone (175 g) and Emerald Innovation NH-1 (80 g, organophosphate flame retardant from Great Lakes) were added to dissolve the prepolymer, and 10 minutes later, triethylamine (6.5 g) was added for neutralization. 10 minutes later, emulsification was carried out: the warm prepolymer mixture was mixed with 415 g warm water to obtain a mixture 50/50 of organic solution/water, which was stirred for 20 minutes at 500 rpm.

Then, the chain extension was performed. The resulting emulsion was placed in a round bottom flask with mechanical stirrer and isophorone diamine (IPDA) was added until no NCO was detected in IR spectrum.

Then, the acetone was removed by a rotavapor evaporator and the resulted dispersion was filtered and the particle size was measured by dynamic light scattering MALVERN equipment. No coagulum was observed on the filter. A particle size of 130 nm and a PDI of 0.096 were recorded in DLS (dynamic light scattering) Malvern Mastersizer.

### Example 3:

Polycarbonate polyol Desmophen 3200 (104.5 g) and anionic stabilizer DMPA (9.67 g) were placed in a 1L three-necked round bottom flask equipped with a condenser and a mechanical stirrer. The mixture was heated to 85°C. At this temperature, the solid components melted and a homogeneous mixture was obtained. At this temperature, high vacuum was applied (< 0.1 mbar) while the temperature was set to 80°C in order to remove water. The mixture was left stirring under vacuum at 80°C for 2 hours.

After that, vacuum was stopped and flask was flushed with Argon. The temperature was decreased to 60°C and then IPDI (46.16 g, isophorone diisocyanate) was also added (3 to 6 °C temperature increased was observed).

Then, a freshly prepared tin catalyst (75 mg) in acetone (75 mg) was added. Upon addition of the catalyst, the temperature raised rapidly to some degrees. When the temperature increase stopped (at around 70°C), the heating was set to 80°C and once at this temperature, it was stirred for 3 hours. Then, the NCO content was measured: 3.33 % NCO. Then a mixture of acetone (175 g) and 1,2-di-[2-ethylhexylcarboxylate]-3,4,5,6-tetrabromobenzene (80 g, commercially available under the trademark DP-45® from Great Lakes) was added to dissolve the prepolymer, and 10 minutes later, triethylamine (6.5 g) was added for neutralization. 10 minutes later, emulsification was carried out: the warm prepolymer mixture was mixed with 415 g warm water to obtain a mixture 50/50 of organic solution/water, which was stirred for 20 minutes at 500 rpm.

Then, the chain extension was performed; the resulting emulsion was placed in a round bottom flask with mechanical stirrer and isophorone diamine (IPDA) was added until no NCO was detected in IR spectrum.

Then, the acetone was removed by a rotavapor evaporator and the resulted dispersion was filtered and the particle size was measured by dynamic light scattering MALVERN equipment. No coagulum was observed on the filter. A particle size of 100 nm and a PDI of 0.084 were recorded in DLS (dynamic light scattering) Malvern Mastersizer.

### Example 4:

Realkyd 20112 polyester polyol (Mₙ = 2090 g/mol; 104.5 g, commercially available from Arkema) and anionic stabilizer DMPA (9.67 g) were placed in a 500 mL three-necked round bottom flask equipped with a condenser and a mechanical stirrer. The mixture was heated to 85 °C. At this temperature, the solid components melted and a homogeneous mixture was obtained. At this temperature, high vacuum was applied (< 0.1 mbar) while the temperature was set to 80 °C in order to remove water. The mixture was left stirring under vacuum at 80 °C for 2 hours.

After that, vacuum was stopped and flask was flushed with Argon. The temperature was decreased to 60 °C and then IPDI (isophorone diisocyanate, 34.0 g) was also added (3 to 6 °C temperature increased was observed).

Then, a freshly prepared tin catalyst (75 mg) in acetone (75 mg) was added. Upon addition of the catalyst, the temperature raised rapidly to some degrees. When the temperature increase stopped (at around 70 °C), the heating was set to 80 °C and once at this temperature, it was stirred for 3 hours. Then, the NCO content was measured: 2.5 % NCO. Then a mixture of acetone (147 g) and diphenyl tolyl phosphate (73.5 g, commercially available under the trademark Disflamoll DPK ® from Lanxess) were added to dissolve the prepolymer, and 10 minutes later, triethylamine (6.5 g) was added for neutralization. 10 minutes later, emulsification was carried out: the warm prepolymer mixture was mixed with 229.5 g warm water to obtain a mixture 49/51 of organic solution (without acetone) /water, which was stirred for 20 minutes at 500 rpm.

Then, the chain extension was performed; the resulting emulsion was placed in a round bottom flask with mechanical stirrer and isophorone diamine (IPDA) was added until no NCO was detected in IR spectrum.

Then, the acetone was removed by a rotavapor evaporator and the resulted dispersion was filtered and the particle size was measured by dynamic light scattering MALVERN equipment. No coagulum was observed on the filter. A particle size of 100 nm and a PDI of around 0.1 were recorded in DLS (dynamic light scattering) Malvern Mastersizer.

### Example 5:

Realkyd 20112 polyester polyol (104.5 g, commercially available from Arkema) and anionic stabilizer DMPA (9.67 g) were placed in a 500 mL three-necked round bottom flask equipped with a condenser and a mechanical stirrer. The mixture was heated to 85 °C. At this temperature, the solid components melted and a homogeneous mixture was obtained. At this temperature, high vacuum was applied (< 0.1 mbar) while the temperature was set to 80 °C in order to remove water. The mixture was left stirring under vacuum at 80 °C for 2 hours.

After that, vacuum was stopped and flask was flushed with Argon. The temperature was decreased to 60 °C and then IPDI (isophorone diisocyanate, 34.0 g) was also added (3 to 6 °C temperature increased was observed).

Then, a freshly prepared tin catalyst (75 mg) in acetone (75 mg) was added. Upon addition of the catalyst, the temperature raised rapidly to some degrees. When the temperature increase stopped (at around 70 °C), the heating was set to 80 °C and once at this temperature, it was stirred for 3 hours. Then, the NCO content was measured: 2.5 % NCO. Then a mixture of acetone (147 g) and Emerald Innovation NH-1 (80 g, organophosphate flame retardant from Great Lakes) were added to dissolve the prepolymer, and 10 minutes later, triethylamine (6.5 g) was added for neutralization. 10 minutes later, emulsification was carried out: the warm prepolymer mixture was mixed with 229.5 g warm water to obtain a mixture 49/51 of organic solution (without acetone)/water, which was stirred for 20 minutes at 500 rpm.

Then, the chain extension was performed; the resulting emulsion was placed in a round bottom flask with mechanical stirrer and isophorone diamine (IPDA) was added until no NCO was detected in IR spectrum.

Then, the acetone was removed by a rotavapor evaporator and the resulted dispersion was filtered and the particle size was measured by dynamic light scattering MALVERN equipment. No coagulum was observed on the filter. A particle size of 100 nm and a PDI of around 0.1 were recorded in DLS (dynamic light scattering) Malvern Mastersizer.

### Example 6: Flammability tests

The dispersions obtained above were applied to a metallized PET film and dried for 2 minutes at 80°C. Then an uncoated Mylar 2 mil film was applied on the adhesive layer. The sample was measured by German DIN 4102 (B1) flammability testing standards, according to which a material is classified as B1 if it fulfils the requirements of a B2-test. The specimen is put on a specimen holder that is hung in a test cabinet. A burner flame is applied to it for 15 seconds. The time to reach a marked point is measured. The data are shown in Table 1.

**Table 1. Flammability measurements**

| Sample | Test type | Results |
|---|---|---|
| Example 1 | B2 test | passed |
| Example 2 | B2 test | passed |
| Example 3 | B2 test | passed |
| Example 4 | B2 test | passed |
| Example 5 | B2 test | passed |

| | | |
|---|---|---|
| *passed: self-extinguished below the maximum burning distance allowed of 15 cm. | | |

## Claims

1. Process for manufacturing an aqueous polyurethane dispersion comprising at least one hydrophobic flame retardant, the process comprising the steps of:
(1) forming an NCO-terminated polyurethane prepolymer with a number average molecular weight Mₙ in the range of 2000 g/mol to 10000 g/mol, preferably of 3000 g/mol to 8000 g/mol, more preferably of 3500 g/mol to 5500 g/mol from a reaction mixture comprising or consisting of:
(a) at least one polyol with a number average molecular weight Mₙ in the range of 400 to 4000 g/mol, preferably of 500 g/mol to 3000 g/mol;
(b) at least one anionic stabilizer, wherein the at least one anionic stabilizer comprises at least two hydroxyl groups and at least one negatively charged functional group, preferably a carboxyl or sulfonic acid group; and
(c) at least one polyisocyanate, preferably at least one aliphatic di- and/or triisocyanate, wherein the at least one polyisocyanate is used in excess with respect to the molar ratio of the isocyanate groups to the hydroxy groups of the other components of the reaction mixture to obtain an NCO-terminated polyurethane prepolymer;
(2) adding at least one hydrophobic flame retardant to the prepolymer to obtain a prepolymer/hydrophobic flame retardant mixture;
(3) dispersing the prepolymer/hydrophobic flame retardant mixture into a continuous aqueous phase to obtain an emulsion; and
(4) reacting the prepolymer with at least one chain extension agent to obtain an aqueous polyurethane dispersion.

2. The process according to claim 1, wherein the at least one polyol comprises at least one polyether polyol, at least one polyester polyol, at least one polycarbonate polyol or a mixture thereof.

3. The process according to claim 1 or 2, wherein the at least one hydrophobic flame retardant is dissolved in an organic solvent prior to step (2).

4. The process according to any one of claims 1 to 3, wherein the process further comprises neutralizing the prepolymer obtained in step (1) prior to step (3).

5. The process according to any one of claims 1 to 4, wherein the reaction mixture is free of
(1) surfactants; and/or
(2) aromatic organic compounds.

6. The process according to any one of claims 1 to 5, wherein the at least one anionic stabilizer comprises a sulfonated polyglycol and/or 2,2-bis(hydroxymethyl)propionic acid (DMPA).

7. The process according to any one of claims 1 to 6, wherein the reaction mixture further comprises at least one nonionic stabilizer, said at least one nonionic stabilizer preferably
(1) having a HLB (hydrophile lipophile balance) value between 6 and 19, preferably between 8 and 18; and/or
(2) being selected from monomeric diols, preferably ethylene glycol, propylene glycol, butylene glycol, neopentyl glycol, or polymers thereof, preferably polyethylene glycol, polypropylene glycol, and polybutylene glycol and copolymers of ethylene glycol, propylene glycol, and butylene glycol, more preferably of ethylene glycol and propylene glycol; and/or
(3) having a weight average molecular weight M_{w} of up to about 4000 g/mol, preferably up to about 3000 g/mol, more preferably up to about 2000 g/mol.

8. The process according to any one of claims 1 to 7, wherein
(1) the at least one flame retardant is selected from the group consisting of organohalogen flame retardants, organophosphorous flame retardants, and mixtures thereof, preferably selected from the group consisting of 1,2-di-[2-ethylhexylcarboxylate]-3,4,5,6-tetrabromobenzene, diphenyl tolyl phosphate, decabromodiphenyl ether (decaBDE), decabromodiphenyl ethane, brominated polystyrenes, brominated carbonate oligomers (BCOs), brominated epoxy oligomers (BEOs), tetrabromophthalic anyhydride, tetrabromobisphenol A (TBBPA), hexabromocyclododecane (HBCD), triphenyl phosphate (TPP), resorcinol bis(diphenylphosphate) (RDP), bisphenol A diphenyl phosphate (BADP), tricresyl phosphate (TCP), dimethyl methylphosphonate (DMMP), aluminum diethyl phosphinate, tris(2,3-dibromopropyl) phosphate (brominated tris), tris(1,3-dichloro-2-propyl)phosphate (chlorinated tris or TDCPP), tetrakis(2-chlorethyl)dichloroisopentyldiphosphate, and combinations thereof; and/or
(2) the at least one hydrophobic flame retardant is contained in the aqueous dispersion in an amount of 2 to 25 wt.-%, preferably 5 wt.-% to 20 wt.-%, and more preferably 10 wt.-% and 15 wt.-% based on the total weight of the aqueous dispersion, with a solid content of up to 55%.

9. The process according to any one of claims 1 to 8, wherein the at least one hydrophobic flame retardant is dissolved in an organic solvent before it is added to the NCO-terminated polyurethane prepolymer, preferably in acetone, wherein the organic solvent is optionally removed after step (4), preferably by vacuum distillation.

10. The process according to any one of claims 1 to 9, wherein
(1) the at least one polyisocyanate is used in excess with respect to the molar ratio of the isocyanate groups to the hydroxy groups of the combined polyols, the OH/NCO equivalent ratio preferably being 1:1.1 to 1:4, and/or
(2) the at least one polyisocyanate is at least one aliphatic diisocyanate or triisocyanate, preferably selected from the group consisting of isophorone diisocyanate (IPDI), hexamethylene diisocyanate (HDI), polymeric polyisocyanates based on IPDI or HDI, and mixtures thereof; and/or
(3) step (3) comprises emulsifying the polyurethane prepolymer/hydrophobic flame retardant mixture into a continuous aqueous phase, preferably water, by mechanical stirring; and/or
(4) the organic solvent/the aqueous solution weight ratio in step (3) being 1:3 to 3:1, preferably 1:2 to 2:1, and more preferably 1:1.5 to 1.5:1; and/or
(5) the method is an one-pot synthesis.

11. The process according to any one of claims 1 to 10, wherein the chain extension agent comprises at least two NCO-reactive groups and is preferably selected from the group consisting of water, a diol and a diamine, more preferably hydrazine, an alkylene diamine, a cycloalkylene diamine, a silane-containing diamine, an alkyldiol, or a polyetherdiamine, most preferably ethylene diamine, water, isophoronediamine, or a polyetherdiamine, and is optionally used in an amount that ensures essentially total conversion of the isocyanate groups.

12. Aqueous polyurethane dispersion obtainable according to a process of any one of claims 1 to 11.

13. Adhesive composition, comprising the aqueous polyurethane dispersion according to claim 12.

14. The adhesive composition according to claim 13, wherein the adhesive composition is free of
(1) inorganic fillers; and/or
(2) organic solvents; and/or
(3) volatile organic compounds (VOC); and/or
(4) metal-containing compounds; and/or
(5) aromatic compounds.

15. Use of the aqueous polyurethane dispersion according to claim 12 in an adhesive composition.
